# EUROPÄISCHE PATENTANMELDUNG

(11) **EP 2 797 197 A1**
(43) Veröffentlichungstag der Anmeldung: **29.10.2014**
(21) Anmeldenummer: 14001248.5
(22) Anmeldetag: 04.04.2014
(51) Int. Cl.: H02J 3/28

(54) **Steuervorrichtung für ein Energieverteilungssystem und Methode zur Steuerung eines Energieverteilungssystems**

(71) Anmelder: ABB Technology AG, 8050 Zürich (CH)
(72) Erfinder: Bauer, Reinhard, 69126 Heidelberg (DE); Schader, Andreas, 63225 Langen (DE); Klose, Silke, 64283 Darmstadt (DE); Subbiah, Subanatarajan, 68309 Mannheim (DE)
(74) Vertreter: Kock, Ina

(57) **Zusammenfassung**

Die Erfindung betrifft ein Verfahren zur Steuerung eines Energieverteilungssystems (14), welches derart beschaffen ist, dass es einen Anschluss (16) an ein Wechselstromversorgungssystem (18) sowie eine Mehrzahl an vorgegebenen Lasten (26, 28, 30) mit Energiespeicherfähigkeit umfasst, welche bedarfsweise mittels einer jeweiligen Schaltvorrichtung (20, 22, 24) innerhalb eines gemeinsamen Zykluszeitraums (64) elektrisch für einen jeweiligen Ansteuerzeitraum (48) mit dem Wechselstromversorgungssystem (18) verbindbar sind und im Verbindungsfall mit ihrer Nennleistung betrieben werden. Das Verfahren beinhaltet folgende Schritte:
• Vorgeben eines summarischen Lastgrenzwertes,
• Optimieren des sich theoretisch ergebenden summarischen Belastungsverlaufs (74, 78, 92, 98, 102) innerhalb eines Zykluszeitraumes (64, 94) durch Wahl von Beginn (46) und Dauer (50) jeweiliger Ansteuerzeiträume (48) derart, dass der Maximalwert (96, 100, 104) des summarischen Belastungsverlaufs (74, 78, 92, 98, 102) den Lastgrenzwert nicht überschreitet, wobei jede Last (26, 28, 30) über den Zykluszeitraum (64, 94) im Mittel mit ihrer vorgegebenen Leistung betrieben wird,
• falls die Optimierung nicht erfolgreich war dann Priorisierung der vorhandenen Lasten (26, 28, 30) und zumindest teilweiser virtueller Lastabwurf wenigstens der am geringsten priorisierten Last und Wiederholung der Optimierung unter Ausschluss der abgeworfenen Last,
• Wiederholung des letzten Schrittes bis Optimierung erfolgreich,
• Ansteuern der Schaltvorrichtungen (20, 22, 24) der nicht-abgeworfenen Lasten über die Dauer eines Zykluszeitraums (64, 94) entsprechend Beginn (46) und Dauer (50) der ermittelten Ansteuerzeiträume (48).

## Beschreibung

Die Erfindung betrifft ein Verfahren zur Steuerung eines Energieverteilungssystems, welches derart beschaffen ist, dass es einen Anschluss an ein Wechselstromversorgungssystem sowie eine Mehrzahl an vorgegebenen Lasten mit Energiespeicherfähigkeit umfasst, welche bedarfsweise mittels einer jeweiligen Schaltvorrichtung innerhalb eines gemeinsamen Zykluszeitraums elektrisch für einen jeweiligen Ansteuerzeitraum mit dem Wechselstromversorgungssystem verbindbar sind und im Verbindungsfall mit ihrer Nennleistung betrieben werden.

Es ist allgemein bekannt, dass elektrische Energie nicht ohne größeren Aufwand speicherbar ist und deshalb in genau dem Moment erzeugt werden muss, in dem sie von den Abnehmern verbraucht wird. Je genauer der Verbrauch vorab bestimmt werden kann, desto besser kann die Erzeugung geplant werden und desto weniger Reserveleistung muss vorgehalten werden. Je langfristiger die Planung der Erzeugung elektrischer Energie ist, desto besser lässt sich diese durchführen. Während sich eine Einsatzplanung beispielsweise von Kohlekraftwerken gut für einen Tag im Voraus durchführen lässt, ist dies in einem kurzfristigen Bereich von beispielsweise einigen 100s praktisch nicht durchführbar. Daher ist es wünschenswert, dass Lasten gerade in diesem kurzfristigen Bereich so wenige unkalkulierbare Schwankungen wie möglich aufweisen, also der Belastungsverlauf innerhalb eines kurzfristigen Zeitraums auf einen möglichst konstanten Wert optimiert ist.

Es ist auch bekannt, dass in industriellen Energieverteilungsnetzen häufig Lasten mit einer Energiespeicherfähigkeit zum Einsatz kommen, beispielsweise elektrothermische Öfen. Eine Energiespeicherung erfolgt hier in Form von thermischer Energie, welche in gewissen Grenzen, beispielsweise in einem Zykluszeitraum von einigen 100s, eine zeitliche Flexibilität bei der Zuführung elektrischer Energie ermöglichen. Hierbei wird eine Last innerhalb des Zykluszeitraums je nach im Mittel zuzuführender Energie für einen Ansteuerzeitraum mit ihrer Nennleistung betrieben und für den Rest des Zykluszeitraums ausgeschaltet. Bei geeigneter Festlegung der Ansteuerzeiträume innerhalb des Zykluszeitraums lässt sich der summarische Verbrauch einer Mehrzahl an Lasten entsprechend gleichmäßiger gestalten. Ein entsprechendes Beispiel für ein derartiges Vorgehen ist beispielsweise in der Patenschrift EP 0563790 A2 beschrieben.

Es kann jedoch auch der Fall auftreten, dass trotz einer derartigen Lastoptimierung das zur Verfügung stehende Leistungsangebot eines speisenden Wechselstromversorgungssystems für bestimmte Zeiträume nicht ausreichend ist, um die Lasten über einen Zykluszeitraum mit einer hinreichenden elektrischen Leistung zu versorgen. In diesem Fall ist es üblich, einen Lastabwurf durchzuführen. Die verschiedenen Lasten werden priorisiert und es werden beginnend mit der am niedrigsten priorisierten Last solange Lastabwürfe durchgeführt, bis das Leistungsangebot des speisenden Wechselstromversorgungsnetzes ausreicht, die noch vorhandenen Lasten zu versorgen.

Als nachteilig erweist sich hierbei, dass es entsprechend der beschriebenen Vorgehensweise zu gegebenenfalls vermeidbaren Lastabwürfen kommt, durch welche die Funktionsfähigkeit eines Energieverteilungsnetzes in nachteiliger Weise beeinträchtigt wird.

Ausgehend von diesem Stand der Technik ist es Aufgabe der Erfindung, ein Verfahren anzugeben, mittels welchem ein nicht notwendiger Lastabwurf vermieden werden kann. Aufgabe der Erfindung ist es auch, eine Steuervorrichtung für ein Energieverteilungsnetz anzugeben, welche die genannten Nachteile vermeidet.

Diese Aufgabe wird gelöst durch ein Verfahren zur Steuerung eines Energieverteilungssystems der eingangs genannten Art, welches durch folgende Schritte gekennzeichnet ist:
- Vorgeben eines summarischen Lastgrenzwertes,
- Optimieren des sich theoretisch ergebenden summarischen Belastungsverlaufs innerhalb eines Zykluszeitraumes durch Wahl von Beginn und Dauer jeweiliger Ansteuerzeiträume derart, dass der Maximalwert des summarischen Belastungsverlaufs den Lastgrenzwert nicht überschreitet, wobei jede Last über den Zykluszeitraum im Mittel mit ihrer vorgegebenen Leistung betrieben wird,
- falls die Optimierung nicht erfolgreich war dann Priorisierung der vorhandenen Lasten und zumindest teilweiser virtueller Lastabwurf wenigstens der am geringsten priorisierten Last und Wiederholung der Optimierung unter Ausschluss der abgeworfenen Last,
- Wiederholung des letzten Schrittes bis Optimierung erfolgreich,
- Ansteuern der Schaltvorrichtungen der nicht-abgeworfenen Lasten über die Dauer eines Zykluszeitraums entsprechend Beginn und Dauer der ermittelten Ansteuerzeiträume.

Die Grundidee der Erfindung besteht darin, nach einem Lastabwurf eine erneute Optimierung des Belastungsverlaufes durchzuführen, und hierdurch einen nicht-notwendigen Abwurf einer weiteren Last zu vermeiden. In diesem Zusammenhang sei angemerkt, dass im Rahmen dieser Anmeldung der Begriff ,Optimierung' nicht im streng mathematischen Sinne zu verstehen ist, nämlich dass die beste aller möglichen Lösungen zu finden ist. Vielmehr ist jede Lösung, bei welcher ein vorgegebener Maximalwert des summarischen Belastungsverlaufs nicht überschritten wird, als optimal anzusehen.

Ein durch Wahl von geeignetem Beginn und Dauer jeweiliger Ansteuerzeiträume gefundenes Optimum des summarischen Belastungsverlaufs innerhalb eines Zykluszeitraumes basiert auf der Voraussetzung, dass alle Lasten, welche zur Findung der jeweiligen Lösung angenommen sind, auch tatsächlich vorhanden sind. Bei Abwurf einer Last kann mit einer hohen Wahrscheinlichkeit davon ausgegangen werden, dass das zuvor gefundene Optimum bei Wegfall einer Last kein Optimum mehr für die nunmehr veränderte Optimierungsaufgabe darstellt.

Dies sei an einem Beispiel erläutert:
Es sind mehrere Lasten vorhanden, welche aufgrund einer geeigneten Wahl von Beginn und Dauer jeweiliger Ansteuerzeiträume über einen Zykluszeitraum einen konstanten summarischen Belastungsverlauf aufweisen. Trotz der durchgeführten Optimierung, durch welche der konstante summarische Belastungsverlauf erreicht wurde, ist das Leistungsangebot des speisenden Wechselstromversorgungsnetzes nicht ausreichend und es erfolgt ein Lastabwurf der am niedrigsten priorisierten Last.

Die am niedrigsten priorisierte Last sei für einen Ansteuerzeitraum der ersten Hälfte des Zykluszeitraumes vorgesehen. Durch Abschalten dieser Last ändert sich der Maximalwert des summarischen Belastungsverlaufes nicht, weil dieser in der zweiten Hälfte des Zykluszeitraumes genauso hoch ist wie vorher, nämlich dem ehemaligen Maximalwert entsprechend. Ein derartiger Lastabwurf würde aus diesem Grunde nicht zum Ziel führen und weitere Lastabwürfe müssten solange erfolgen, bis der Maximalwert des Belastungsverlaufes unterhalb des summarischen Lastgrenzwertes liegt.

Wenn der zuerst ermittelte konstante summarische Belastungsverlauf ohne Lastabwurf jedoch nur infinitesimal oberhalb des summarischen Lastgrenzwertes liegt, dann wäre bereits der Abwurf einer einzigen Last theoretisch ausreichend, um im Mittel über den Zykluszeitraum die verbleibenden Lasten ohne Überschreitung des summarischen Lastgrenzwertes zu versorgen.

Durch die Einführung eines zusätzlichen Optimierungsschrittes vor einem erneuten Lastabwurf wird daher in vorteilhafter Weise ein vermeidbarer Lastabwurf vermieden.

Nach abschließender Optimierung und Ermittlung des Beginns und der Dauer der Ansteuerzeiträume sowie der gegebenenfalls abzuwerfenden Lasten erfolgt ein Ansteuern der Schaltvorrichtungen der nicht-abgeworfenen Lasten über die Dauer eines Zykluszeitraums entsprechend Beginn und Dauer der ermittelten Ansteuerzeiträume.

Als primäres Ziel der Optimierung vor einem möglichen Lastabwurf ist eine Minimierung des Maximalverbrauches, also eine Elimination von Lastspitzen, zu verstehen. Die Optimierung des Beginns und der Länge der Ansteuerzeiträume wird ermöglicht durch die Energiespeicherfähigkeit der Lasten, wodurch deren Ansteuerzeitraum innerhalb eines Zykluszeitraums sowohl geteilt als auch verschoben werden kann. Zykluszeiträume dauern typischer Weise nicht mehr als einige 100s. Es können beispielsweise mechanische, thermische oder elektrische Energie gespeichert werden. Hierdurch ergibt sich eine zusätzliche Flexibilität bei der Aufteilung der verschiedenen Lasten im Rahmen des Optimierungsvorgangs. Ganz allgemein sind als Lasten mit Energiespeicherfähigkeit diejenigen Lasten zu sehen, deren Ansteuerzeitraum im Zykluszeitraum frei wählbar ist. Die Anzahl von Lasten in einem Energieverteilungsnetz beträgt beispielsweise 20 bis 100, wobei deren jeweilige Leistung beispielsweise in einem Bereich von einigen kW bis über 1 MW liegt.

Diese Flexibilität sei anhand eines exemplarischen Beispiels einer Optimierung erläutert, welche für einen Zykluszeitraum von beispielsweise 1 s bis einigen 100s erfolgen kann. Die jeder Last im Mittel über den Zykluszeitraum zuzuführende Leistung ist bekannt und ergibt sich beispielsweise aus produktionstechnischen Erfordernissen. Hieraus wird zunächst ein jeweiliger erforderlicher Ansteuerzeitraum bestimmt, für welchen die jeweilige Last innerhalb des Zykluszeitraums anzuschalten ist, wobei die Lage des Ansteuerzeitraums zunächst noch nicht bestimmt ist.

In einem nachfolgenden Schritt werden die Lasten in eine Reihenfolge gebracht, in welcher diese bei der Optimierung zu berücksichtigen sind. Hier bietet es sich beispielsweise an, Lasten mit einem hohen Energiebedarf höher zu priorisieren. Der Einschaltzeitpunkt des Ansteuerzeitraumes der am höchsten priorisierten Last wird an den Anfang des Zykluszeitraums gelegt. Nachfolgend wird im unmittelbaren Anschluss an das Ende dieses Ansteuerzeitraums der Einschaltzeitpunkt des Ansteuerzeitraumes einer Last gelegt, welcher zeitlich noch in den restlichen Zykluszeitraum passt.

Hierbei wird vorzugsweise nach dem Festlegen des Einschaltzeitpunktes des Ansteuerzeitraums einer Last der summarische Belastungsverlauf aller bisher festgelegten Lasten gebildet und festgestellt, in welchem Zeitabschnitt des Zykluszeitraums sich ein 'Belastungstal' befindet. Als nächstes wird der Einschaltzeitpunkt des Ansteuerzeitraums einer Last bestimmt, welcher geeignet ist, das 'Belastungstal' zu füllen. Hierbei ergibt sich die Schwierigkeit, dass jeweils geeignete Ansteuerzeiträume idealerweise auch eine bevorzugte Dauer aufweisen, welche ermöglicht, ein ,Belastungstal' komplett zu füllen.

Der Wegfall einer Last durch Lastabwurf führt dann zu der Bildung eines ,Belastungstals', was erfindungsgemäß durch eine erneute Optimierung eliminiert wird.

Eine Priorisierung der Lasten kann dynamisch erfolgen, also jeweils unmittelbar vor einem Lastabwurf, so dass hier sich gegebenenfalls verändernde Randparameter berücksichtigt werden können.

Gemäß einer besonders bevorzugten Ausgestaltungsform des erfindungsgemäßen Verfahrens wird dieses für eine Vielzahl an aufeinanderfolgenden Zykluszeiträumen durchgeführt. Somit ist ein kontinuierliches Steuern eines Energieverteilungsnetzes für einen längeren Zeitraum gewährleistet.

Gemäß einer speziellen Ausgestaltungsform des erfindungsgemäßen Verfahrens wird im Falle eines Lastabwurfs genau die am geringsten priorisierte Last komplett abgeworfen. Der Abwurf nur einer einzigen Last erweist sich als vorteilhafte iterative Herangehensweise um einen nicht-notwendigen Lastabwurf zu vermeiden. Der Abwurf der am geringsten priorisierten Last, also der Last, welche am entbehrlichsten scheint, führt in vorteilhafter Weise zu den geringsten Rückwirkungen auf beispielsweise einen Produktionsprozess, welcher von dem Energieverteilungssystem versorgt wird.

Entsprechend einer weiteren Erfindungsvariante wird im Falle eines teilweisen Lastabwurfes beim nachfolgenden Optimierungsvorgang eine im Mittel reduzierte Leistung für die jeweilige Last vorgegeben. Es kann je nach Art der Last auch möglich sein, diese abweichend von der ursprünglichen Lastvorgabe zumindest für einen kürzeren Zeitraum von beispielsweise einigen Minuten mit einer reduzierten mittleren Leistung zu betrieben. Dies kann beispielsweise bei thermoelektrischen Öfen mit einer sehr langen thermischen Zeitkonstante der Fall sein. Auf diese Weise kann in vorteilhafter Weise ein kompletter Lastabwurf vermieden werden und der Weiterbetrieb beispielsweise einer Produktionsanlage ist zumindest für einen kurzfristigen Zeitraum gewährleistet.

Gemäß einer weiteren Variante des erfindungsgemäßen Verfahrens wird für mehrere gleich-priorisierte Lasten gleichzeitig ein teilweiser Lastabwurf durchgeführt. Dies ist zum Beispiel sinnvoll, wenn mehrere gleichartige Lasten mit sehr langer Speicherzeitkonstante vorhanden sind. Auf diese Weise kann trotz eines im Mittel geringfügig nicht ausreichenden Leistungsangebotes des Wechselstromversorgungsnetzes ein Produktionsprozess noch für eine möglichst lange Zeit aufrechterhalten werden.

Gemäß einer weiteren Variante des erfindungsgemäßen Verfahrens erfolgt eine Optimierung des sich innerhalb eines Zykluszeitraumes summarisch ergebenden Belastungsverlaufs zusätzlich in Hinblick auf einen möglichst konstanten Verlauf. Ein konstanter Verlauf begünstigt letztendlich auch ein nicht-Überschreiten des Lastgrenzwertes, wohingegen das Vermeiden des Überschreitens des Lastgrenzwertes nicht notwendiger Weise einen konstanten Verlauf bedingt, insbesondere nicht wenn der Lastgrenzwert deutlich höher ist als der Belastungsverlauf in seinem Mittelwert. So gesehen stellt die Optimierung auf konstanten Belastungsverlauf den komplexeren Fall dar. Durch einen möglichst konstanten Belastungsverlauf innerhalb des Zykluszeitraumes sind die etwaigen Rückwirkungen auf das speisende Wechselstromversorgungsnetz in vorteilhafter Weise möglichst gering gehalten.

Gemäß einer besonders bevorzugten Ausgestaltungsvariante des erfindungsgemäßen Verfahrens werden für den Fall, dass
- wenigstens eine Last bereits zumindest teilweise abgeworfen ist und
- der sich nach einer Optimierung ergebende im Zykluszeitraum maximal auftretende summarische Lastwert unterhalb des Lastgrenzwertes liegt,
   folgende zusätzliche Schritte durchgeführt:
- der zumindest teilweise Lastabwurf wenigstens einer abgeworfenen Last wird rückgängig gemacht,
- eine erneute Optimierung wird durchgeführt,
- falls der dann maximal auftretende summarische Lastwert den Lastgrenzwert nicht überschreitet wird die Rückgängigmachung des Lastabwurfes beibehalten, sonst widerrufen.

Dies ist insbesondere vorteilhaft, wenn sich Randbedingungen wie beispielsweise die Lastvorgaben für die Lasten oder das Leistungsangebot des speisenden Wechselstromversorgungsnetzes zwischen verschiedenen Zykluszeiträumen ändern. Auf diese Weise kann eine zumindest teilweise abgeworfene Last bei Entfall des Grundes für den Wegfall auf einfache Weise wieder in die Versorgung einbezogen werden.

Gemäß einer weiteren Variante des erfindungsgemäßen Verfahrens ist die Priorisierung der Lasten unveränderlich und wird vorab durchgeführt, so dass dies nicht vor jedem Lastabwurf erneut durchzuführen ist. In vielen Fällen hängt die Priorisierung der Lasten von deren Funktion im Energieverteilungsnetz ab und ist unveränderlich. Häufig ist auch eine manuelle Festlegung der Priorisierung notwendig. Das erfindungsgemäße Verfahren kann unter diesen Randbedingungen in vorteilhafter Weise vereinfacht werden.

Die erfindungsgemäße Aufgabe wird auch gelöst durch eine Steuervorrichtung für ein Energieverteilungssystem, umfassend eine Rechenvorrichtung und ein Interface zur Ansteuerung von Schaltvorrichtungen, wobei die Steuervorrichtung zur Ausführung des erfindungsgemäßen Verfahrens zur Steuerung eines Energieverteilungssystems vorbereitet ist.

Eine Steuervorrichtung ist eine Rechenvorrichtung mit einem Arbeitsspeicher, welche über entsprechende Interfacemöglichkeiten zur Ansteuerung beispielsweise der Schaltvorrichtungen verfügt. Vorzugsweise ist auch eine Kommunikationsvorrichtung vorgesehen, mittels welcher beispielsweise eine Parametrierung der Steuervorrichtung ermöglicht ist. Im Speicher der Steuervorrichtung ist ein entsprechendes Programmprodukt vorgesehen, mittels welchem die Optimierung durchgeführt wird. Nach Abschluss der Optimierung erfolgt ab Beginn des Zykluszeitraumes durch die Steuervorrichtung eine Ansteuerung der Schaltvorrichtungen entsprechend den ermittelten Zeiträumen.

Die Schaltvorrichtungen ermöglichen eine direkte Verbindung beziehungsweise eine komplette Trennung einer Last vom Wechselstromversorgungsnetz für die Dauer von wenigstens einer Halbwelle beziehungsweise einer halben Periodenlänge. Bei einer Netzfrequenz von 50Hz ergibt sich die Dauer einer Halbwelle zu 10ms.

Die sich ergebenden Vorteile einer derartigen Steuervorrichtung entsprechen den bereits erläuterten Vorteilen des erfindungsgemäßen Verfahrens zur Steuerung eines Energieverteilungssystems.

Weitere vorteilhafte Ausgestaltungsmöglichkeiten sind den weiteren abhängigen Ansprüchen zu entnehmen.

Anhand der in den Zeichnungen dargestellten Ausführungsbeispiele, sollen die Erfindung, weitere Ausführungsformen und weitere Vorteile näher beschrieben werden.

Es zeigen:
- Fig. 1: ein exemplarisches Energieverteilungssystem mit Steuervorrichtung,
- Fig. 2: ein Übersichtsbild für auftretende Zeiträume,
- Fig. 3: exemplarische Belastungsverläufe eines Wechselstromversorgungssystems sowie
- Fig. 4: exemplarische Belastungsverläufe.

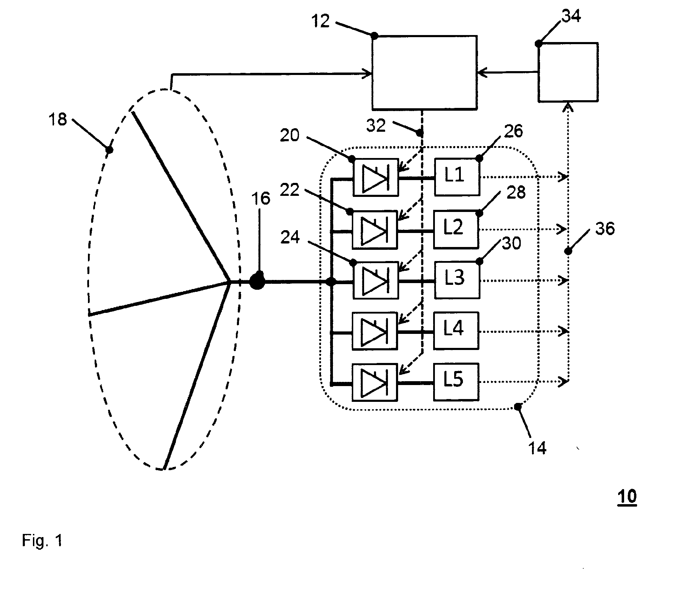

Fig. 1 zeigt ein exemplarisches Energieverteilungssystem 14 mit einer Steuervorrichtung 12 in einer schematischen Ansicht 10. Das Energieverteilungssystem weist mehrere Lasten 26, 28, 30 auf, beispielsweise elektrothermische Lasten oder auch Lasten mit einem elektrischen Energiespeicher, welche über eine jeweilige Schaltvorrichtung 20, 22, 24, beispielsweise einem Thyristorsteller, mittels eines elektrischen Anschlusses 16 mit einem elektrischen Versorgungsnetz 18 verbunden sind.

Die Steuervorrichtung 12 umfasst in diesem Fall eine Rechenvorrichtung, auf welcher ein Optimierungsprogrammprodukt installiert ist, sowie eine Kommunikationsschnittstelle, um über eine Steuerverbindung 32 eine lastoptimierte Ansteuerung der Schaltvorrichtungen 20, 22, 24 zu ermöglichen. Über die Kommunikationsschnittstelle werden der Steuervorrichtung 12 zudem aus einem Datenspeicher 34 zusätzliche Daten über die Lasten 26, 28, 30 bereitgestellt, welche diesem dynamisch über eine Datenverbindung 36 direkt von einer jeweiligen Kontrollvorrichtung der jeweiligen Lasten 26, 28, 30 zugeführt werden.

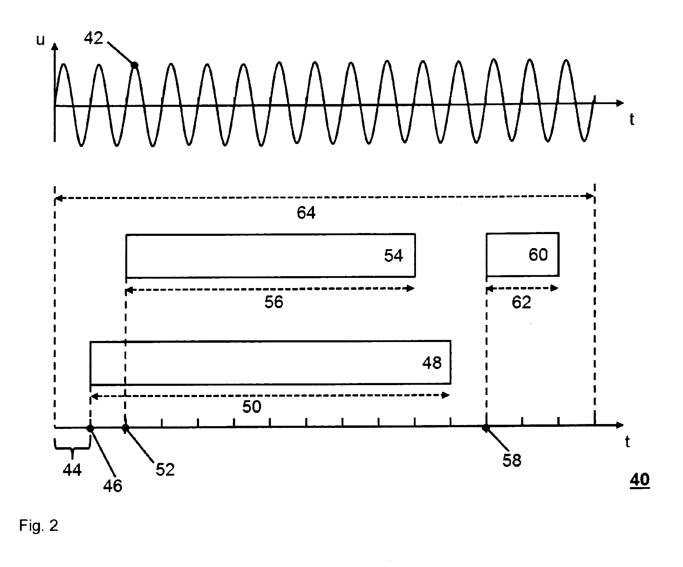

Fig. 2 zeigt ein Übersichtsbild 40 über erfindungsgemäß definierte Zeiträume. Im oberen Teil der Figur ist der sinusartige Spannungsverlauf 42 der Spannung eines Wechselstromversorgungsnetzes gezeigt, wobei sich bei einer Frequenz von 50Hz die Länge einer Halbwelle zu 10ms ergibt.

Im unteren Teil der Figur ist eine Zeitachse t gezeichnet, welche eine Skalierung entsprechend der Dauer einer Netzperiode 44 mit zwei Halbwellen aufweist. Mit dem Pfeil mit der Bezugsziffer 64 ist die Dauer eines exemplarischen Zykluszeitraums von 15 Perioden, bei 50Hz also 300ms, angedeutet.

Ein Ansteuerzeitraum 48 beginnt 46 nach der ersten Netzperiode und dauert 10 Netzperioden wie mit dem Pfeil mit der Bezugsziffer 50 angedeutet. Im Rahmen eines erfindungsgemäßen Optimierungsprozesses kann dieser Ansteuerzeitraum 48 beispielsweise durch zwei summarisch gleich lange Blockzeiträume substituiert werden. Der erste Blockzeitraum 54 beginnt 52 beispielhaft nach der zweiten Netzperiode und dauert 56 acht Netzperioden und der zweite Blockzeitraum 60 beginnt 58 beispielhaft nach der dreizehnten Netzperiode und dauert 62 zwei Netzperioden. Summarisch ergibt sich für beide Varianten eine Dauer von zehn Netzperioden.

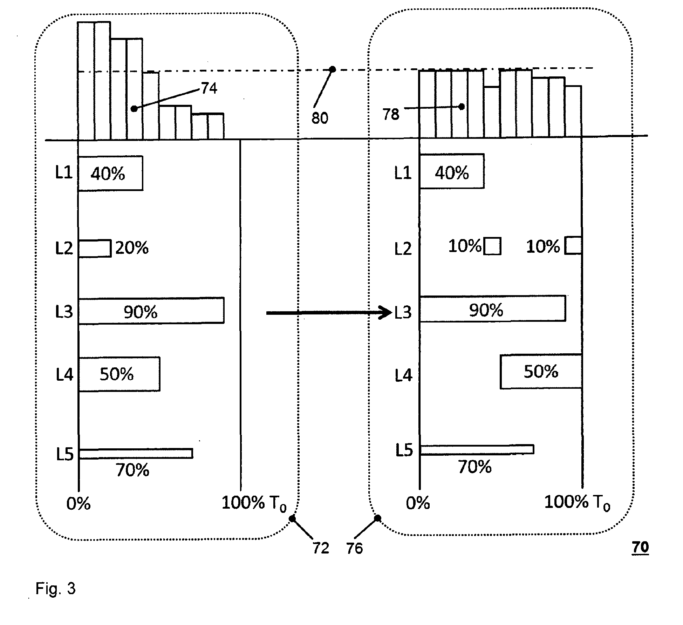

Fig. 3 zeigt exemplarische Belastungsverläufe eines Wechselstromversorgungssystems in einer Darstellung 70. Im linken Bereich mit der Bezugsziffer 72 sind exemplarische Lastverläufe ohne jegliche Optimierung dargestellt. Verschiedene Lasten L1, L2, L3, L4, L5 sind übereinander als Balken entsprechend ihrer betriebsbedingten Ansteuerzeit, welche in diesem Fall zwischen 20% und 70% der Länge To des Zykluszeitraumes beträgt, dargestellt, wobei jeder Balken zunächst am Anfang des Zykluszeitraums beginnt, also keine Optimierung erfolgt ist. Die Dicke eines jeweiligen Balkens entspricht der Nennleistung der betreffenden Last, so dass die Fläche der Balken letztendlich ein Maß für den elektrischen Energiebedarf einer Last innerhalb des Zykluszeitraumes darstellt.

Die Flächen der Balken sind graphisch aufaddiert als Belastungsverlauf 74 ohne Optimierung gezeigt, wobei die senkrechten Linien übersichtshalber eine 10% Quantelung des Zykluszeitraumes darstellen. Es ist deutlich zu sehen, dass ohne Optimierung eine deutliche unerwünschte Schwankung des Belastungsverlaufes 74 um einen Mittelwert 80 erfolgt.

Im rechten Bereich mit der Bezugsziffer 76 sind exemplarische Lastverläufe mit Optimierung dargestellt. Die Anfangszeitpunkte der Ansteuerzeiträume der Lasten L1, L3, L4 und L5 beziehungsweise der diese repräsentierenden Balken sind im Rahmen eines Optimierungsprozesses angepasst worden, insbesondere ist hierbei der Anfangszeitraum der Last L4 um eine halbe Zykluszeit verschoben worden. Der Ansteuerzeitraum der Last L2 ist in zwei Blockzeiträume aufgeteilt worden, deren Beginn entsprechend verzögert wurde.

Der aufaddierte Belastungsverlauf 78 mit Optimierung zeigt nunmehr kaum noch Schwankungen um den Mittelwert 80. Es sei abermals darauf hingewiesen, dass eine Optimierung im Rahmen der Erfindung nicht als Optimierung in streng mathematischem Sinn aufzufassen ist.

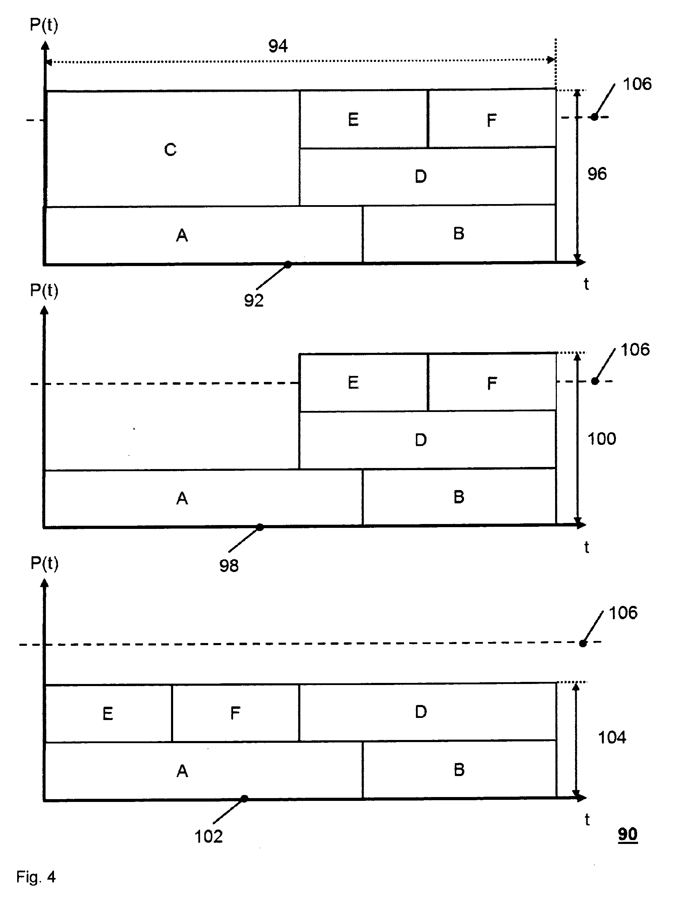

Fig. 4 zeigt exemplarische Belastungsverläufe in einer Darstellung 90. Im einem ersten Belastungsverlauf 92 ist ein exemplarischer optimierter Verlauf der summarischen Belastung durch Lasten A, B, C, D, E, F über einen Zykluszeitraum 92 gezeigt. Jede Last ist durch ein Rechteck repräsentiert, dessen Länge einem jeweiligen Ansteuerzeitraum, dessen Höhe der dabei eingetragenen Leistung und dessen Flächeninhalt der im Zykluszeitraum zugeführten Energie entspricht. Der summarische Belastungsverlauf ist optimiert und verläuft über den gesamten Zykluszeitraum 92 konstant. Der Maximalwert des Belastungsverlaufes ist mit dem Pfeil mit der Bezugsziffer 96 gekennzeichnet und übersteigt einen mit einer gestrichelten Linie angedeuteten Lastgrenzwert 106.

Ein zweiter Belastungsverlauf 98 zeigt dasselbe Beispiel, jedoch nach einem Lastabwurf der Last C. Der summarische Belastungsverlauf der verbliebenen Lasten A,B, D, E, F weist eine große Schwankung auf und dessen Maximalwert 100 entspricht von der Höhe der dem Maximalwert 96 ohne Lastabwurf. Der Lastabwurf der Last C hat in diesem Beispiel den Maximalwert 100 mit Lastabwurf gegenüber dem Maximalwert 96 ohne Lastabwurf nicht verändert, der Lastgrenzwert 106 ist trotz Lastabwurf überschritten. Ohne einen weiteren Optimierungsschritt würde nunmehr gemäß dem Stand der Technik beispielsweise ein Abwurf der Lasten D beziehungsweise E und F folgen, um eine Reduktion der Maximalbelastung 100 zu erreichen, wobei ein alleiniger Abwurf einer der Lasten B, E oder F ebenfalls nicht den gewünschten Effekt erzielen würde.

Ein dritter Belastungsverlauf 102 zeigt die Lastverteilung nach dem ersten Lastabwurf und erfindungsgemäßer anschließender Optimierung. Ohne zusätzlichen Lastabwurf ist der Maximalwert 104 alleine durch die Optimierung reduziert worden und ein weiterer Lastabwurf dadurch vermieden.

### Bezugszeichenliste

- 10: exemplarisches Energieverteilungssystem mit Steuervorrichtung
- 12: Steuervorrichtung
- 14: Energieverteilungssystem
- 16: Anschluss
- 18: Wechselstromversorgungssystem
- 20: erste Schaltvorrichtung
- 22: zweite Schaltvorrichtung
- 24: dritte Schaltvorrichtung
- 26: erste Last
- 28: zweite Last
- 30: dritte Last
- 32: Steuerverbindung
- 34: Datenspeicher
- 36: Datenverbindung
- 40: Übersichtsbild Zeiträume
- 42: Spannungsverlauf Wechselstromversorgungsnetz
- 44: Netzperiode mit zwei Halbwellen
- 46: Beginn Ansteuerzeitraum
- 48: Ansteuerzeitraum
- 50: Dauer Ansteuerzeitraum
- 52: Beginn erster Blockzeitraum
- 54: erster Blockzeitraum
- 56: Dauer erster Blockzeitraum
- 58: Beginn zweiter Blockzeitraum
- 60: zweiter Blockzeitraum
- 62: Dauer zweiter Blockzeitraum
- 64: Zykluszeitraum
- 70: exemplarische Belastungsverläufe eines Wechselstromversorgungssystems
- 72: Lastverlauf und Belastungsverlauf ohne Optimierung
- 74: Belastungsverlauf ohne Optimierung
- 76: Lastverlauf und Belastungsverlauf mit Optimierung
- 78: Belastungsverlauf mit Optimierung
- 80: zeitliches Mittel der Belastung
- 90: exemplarische Belastungsverläufe
- 92: optimierter erster Belastungsverlauf ohne Lastabwurf
- 94: Zykluszeitraum
- 96: Maximalwert erster Belastungsverlauf
- 98: nicht-optimierter zweiter Belastungsverlauf nach Lastabwurf
- 100: Maximalwert zweiter Belastungsverlauf
- 102: optimierter dritter Belastungsverlauf nach Lastabwurf
- 104: Maximalwert dritter Belastungsverlauf
- 106: Lastgrenzwert

## Patentansprüche

1. Verfahren zur Steuerung eines Energieverteilungssystems (14), welches derart beschaffen ist, dass es einen Anschluss (16) an ein Wechselstromversorgungssystem (18) sowie eine Mehrzahl an vorgegebenen Lasten (26, 28, 30) mit Energiespeicherfähigkeit umfasst, welche bedarfsweise mittels einer jeweiligen Schaltvorrichtung (20, 22, 24) innerhalb eines gemeinsamen Zykluszeitraums (64, 94) elektrisch für einen jeweiligen Ansteuerzeitraum (48) mit dem Wechselstromversorgungssystem (18) verbindbar sind und im Verbindungsfall mit ihrer Nennleistung betrieben werden, beinhaltend folgende Schritte:
• Vorgeben eines summarischen Lastgrenzwertes,
• Optimieren des sich theoretisch ergebenden summarischen Belastungsverlaufs (74, 78, 92, 98, 102) innerhalb eines Zykluszeitraumes (64, 94) durch Wahl von Beginn (46) und Dauer (50) jeweiliger Ansteuerzeiträume (48) derart, dass der Maximalwert (96, 100, 104) des summarischen Belastungsverlaufs (74, 78, 92, 98, 102) den Lastgrenzwert nicht überschreitet, wobei jede Last (26, 28, 30) über den Zykluszeitraum (64, 94) im Mittel mit ihrer vorgegebenen Leistung betrieben wird,
• falls die Optimierung nicht erfolgreich war dann Priorisierung der vorhandenen Lasten (26, 28, 30) und zumindest teilweiser virtueller Lastabwurf wenigstens der am geringsten priorisierten Last und Wiederholung der Optimierung unter Ausschluss der abgeworfenen Last,
• Wiederholung des letzten Schrittes bis Optimierung erfolgreich,
• Ansteuern der Schaltvorrichtungen (20, 22, 24) der nicht-abgeworfenen Lasten über die Dauer eines Zykluszeitraums (64, 94) entsprechend Beginn (46) und Dauer (50) der ermittelten Ansteuerzeiträume (48).

2. Verfahren nach Anspruch 1, **dadurch gekennzeichnet, dass** dieses für eine Vielzahl an aufeinanderfolgenden Zykluszeiträumen durchgeführt wird.

3. Verfahren nach einem der Ansprüche 1 oder 2, **dadurch gekennzeichnet, dass** im Falle eines Lastabwurfs genau die am geringsten priorisierte Last (26, 28, 30) komplett abgeworfen wird.

4. Verfahren nach einem der Ansprüche 1 oder 2, **dadurch gekennzeichnet, dass** im Falle eines teilweisen Lastabwurfes beim nachfolgenden Optimierungsvorgang eine im Mittel reduzierte Leistung für die jeweilige Last (26, 28, 30) vorgegeben wird.

5. Verfahren nach Anspruch 4, **dadurch gekennzeichnet, dass** für mehrere gleich-priorisierte Lasten gleichzeitig ein teilweiser Lastabwurf durchgeführt wird.

6. Verfahren nach einem der vorherigen Ansprüche, **dadurch gekennzeichnet dass** eine Optimierung des sich innerhalb eines Zykluszeitraumes (64, 94) summarisch ergebenden Belastungsverlaufs (74, 78, 92, 98, 102) zusätzlich in Hinblick auf einen möglichst konstanten Verlauf erfolgt.

7. Verfahren nach einem der vorherigen Ansprüche, **dadurch gekennzeichnet, dass** für den Fall, dass
• wenigstens eine Last (26, 28, 30) bereits zumindest teilweise abgeworfen ist und
• der sich nach einer Optimierung ergebende im Zykluszeitraum (64, 94) maximal auftretende summarische Lastwert unterhalb des Lastgrenzwertes liegt,
folgende zusätzliche Schritte durchgeführt werden:
• der zumindest teilweise Lastabwurf wenigstens einer abgeworfenen Last wird rückgängig gemacht,
• eine erneute Optimierung wird durchgeführt,
• falls der dann maximal auftretende summarische Lastwert den Lastgrenzwert nicht überschreitet wird die Rückgängigmachung des Lastabwurfes beibehalten, sonst widerrufen.

8. Verfahren nach einem der vorherigen Ansprüche, **dadurch gekennzeichnet dass** die Priorisierung der Lasten unveränderlich ist und vorab durchgeführt wird.

9. Steuervorrichtung (12) für ein Energieverteilungssystem, umfassend eine Rechenvorrichtung und ein Interface zur Ansteuerung von Schaltvorrichtungen (20, 22, 24), **dadurch gekennzeichnet**
**dass** diese zur Ausführung eines Verfahrens nach einem der Ansprüche 1 bis 8 vorbereitet ist.
